# EUROPÄISCHE PATENTSCHRIFT

(11) **EP 2 553 784 B1**
(45) Veröffentlichungstag und Bekanntmachung des Hinweises auf die Patenterteilung: **27.08.2014**
(21) Anmeldenummer: 11705896.6
(22) Anmeldetag: 01.03.2011
(51) Int. Cl.: H02G 5/00, B60R 16/023

(54) **STROMSCHIENE FÜR EINEN STROMVERTEILER IN FAHRZEUGEN SOWIE STROMVERTEILER MIT EINER SOLCHEN STROMSCHIENE**
BUSBAR FOR A POWER DISTRIBUTOR IN VEHICLES AND POWER DISTRIBUTOR HAVING SUCH A BUSBAR
RAIL DE DISTRIBUTION POUR UN DISTRIBUTEUR ÉLECTRIQUE DANS DES VÉHICULES, AINSI QUE DISTRIBUTEUR ÉLECTRIQUE POSSÉDANT UN TEL RAIL DE DISTRIBUTION

(30) Priorität: 31.03.2010 DE 102010003515
(43) Veröffentlichungstag der Anmeldung: 06.02.2013
(73) Patentinhaber: Lisa Dräxlmaier GmbH, 84137 Vilsbiburg (DE)
(72) Erfinder: FÜSSL, Peter, 84137 Vilsbiburg (DE); HÜNING, Kai, 84387 Julbach (DE); BACHHOFER, Robert, 90559 Burghann/Ezelsdorf (DE)
(74) Vertreter: HOFFMANN EITLE
(86) Internationale Anmeldenummer: PCT/EP2011/052995
(87) Internationale Veröffentlichungsnummer: WO 2011/120748

(56) Entgegenhaltungen:
- DE-A1- 10 232 650
- DE-U1-202009 009 607
- US-A1- 2002 031 924

## Beschreibung

Die vorliegende Erfindung betrifft einen Stromverteiler in Fahrzeugen mit einer Stromschiene.

In solchen Stromverteilern, bei denen es sich um Vorsicherungsdosen handeln kann, fließen in der Regel hohe Ströme von bis zu ca. 400 Ampere. Dadurch erhitzt sich die Stromschiene im Betrieb. Darüber hinaus sind die Stromverteiler meist im Bereich des Aggregats im Motorraum angeordnet und sind dadurch sowohl im Stand durch etwaige Sonneneinstrahlung als auch im Betrieb durch die Abwärme des Motors hohen Temperaturen ausgesetzt. Durch diese hohen Temperaturen kommt es zu Ausdehnungen der Stromschiene sowie des Gehäuses des Stromverteilers, die aufgrund der unterschiedlichen Materialien unterschiedlich ausfallen. Aufgrund der unterschiedlichen Ausdehnungen sind hohe Belastungen auf die an der Stromschiene angeschlossenen Elemente insbesondere Sicherungen wahrscheinlich, die zum Ausfall oder einer Beschädigung der befestigten Elemente führen können.

Um diese Problematik zu lösen, schlägt die DE 20 2009 009 607 U1, welche die Basis für den Oberbegriff von Anspruch 1 bildet, einen zentralen Kompensationsabschnitt zwischen zwei Fixierabschnitten der Stromschiene vor. Stromschienen werden in der Regel an mehreren Abschnitten in oder an dem Gehäuse des Stromverteilers befestigt. Zwischen solchen zwei Fixierabschnitten wird ein Kompensationsabschnitt vorgeschlagen.

Aufgrund des vielfach nur begrenzt zur Verfügung stehenden Bauraums und unterschiedlicher Ausgestaltungen kann ein solcher Kompensationsabschnitt zwischen zwei Fixierpunkten nicht immer vorgesehen werden.

Darüber hinaus offenbart die US-A-2002/0031924 A1 eine Stromschiene, die über zwei Bolzen in einem Gehäuse befestigt werden kann. Dabei ist die Stromschiene U-förmig gebogen und weist mehrere zu dem Schenkel des U senkrecht gebogene Fahnen auf. Diese ragen in Ausnahmen des Gehäuses, in die Steckkontaktbuchsen eingeführt sind und lose auf die Fahnen aufgesteckt sind. In diese Kontaktbuchsen sind herkömmliche KFZ-Sicherungen einsteckbar. Um die Fahnen im rechten Winkel biegen zu können, sind in dem gestanzten Material Hinterschnitte vorgesehen, wobei der Querschnitt der Fahnen und der Anbindung zum verbleibenden Teil der Stromschiene gleichbleibend ist.

Die Aufgabe der vorliegenden Erfindung beruht folglich darin eine Alternative zu dem besagten Kompensationsabschnitt zwischen zwei Befestigungsabschnitten zu schaffen, die unabhängig von dem vorhandenen Bauraum auf einfache Art und Weise realisierbar ist.

Diese Aufgabe wird durch einen Stromverteiler mit den Merkmalen des Anspruchs 1 gelöst. Vorteilhafte Weiterbildungen der vorliegenden Erfindung finden sich in den Unteransprüchen.

Der vorliegenden Erfindung liegt der Gedanke zu Grunde den Kompensationsabschnitt nicht zentral zwischen zwei Fixierbereichen anzuordnen, sondern die Befestigungsbereiche der Stromschiene, an denen Sicherungen zu befestigen sind, welche die Stromschiene mit einem Verbraucher verbinden, soweit durch Schlitze von dem verbleibenden Teil der Stromschiene zu trennen, dass der Befestigungsbereich nur über einen zur Stromübertragung notwendigen Querschnitt mit dem verbleibenden Teil der Stromschiene verbunden ist. Dabei sind die Schlitze nicht zentral, sondern jeweils in der unmittelbaren Umgebung der Befestigungsbereiche angeordnet. Ferner liegen der Befestigungsbereich und der verbleibende Teil der Stromschiene vorzugsweise in derselben (In Flucht) oder in parallelen Ebenen (parallel versetzt zueinander). Durch das Vorsehen der Schlitze kann die Form der Stromschienen in Bezug auf deren Umfang beibehalten werden, so dass die vorliegende Erfindung auch bei bestehenden Stromschienen ohne großen Aufwand und Modifikation anderer Bauteile eingesetzt werden kann. Darüber hinaus wird durch die Entnahme von Material im Bereich der Schlitze nicht mehr oder weniger Bauraum benötigt. Schließlich ist diese Ausgestaltung fertigungstechnisch einfach realisierbar.

Dementsprechend schlägt die vorliegende Erfindung einen Stromverteiler in Fahrzeugen mit einer Stromschiene vor, die wenigstens einen Befestigungsbereich für Sicherungen umfasst. Bei diesem Befestigungsbereich handelt es sich um einen Befestigungsbereich, an dem eine Sicherung mit der Stromschiene verbunden ist. Die Sicherung wird anderen Endes mit einem Verbraucher bzw. einem Verbraucherkreis verbunden werden. Der Befestigungsbereich kann beliebiger Art sein. Es können Steckverbindungen, Schraubverbindungen, Stoffschlüssige Schweiß- oder Klebeverbindungen, etc. zum Einsatz kommen. Die Sicherung erstreckt sich von der Befestigung der Sicherung an der Stromschiene zu der Kontaktierung der Sicherung mit einer weiteren elektrischen Leitung zur Verbindung mit dem Verbraucher oder Verbraucherkreis (Erstreckungsrichtung der Sicherung). Bei den Sicherungen handelt es sich vorzugsweise um Sicherungen nach ISO 8820-5 (Typ SF30 und SF51) mit asymmetrisch gestalteten Z- oder S-förmigen Sicherungsschmelzleitern. Der Befestigungsbereich, an dem die Sicherung zu befestigen ist, ist, wie es eingangs erwähnt wurde, durch wenigstens einen die Stromschiene (vollständig) durchtrennenden Schlitz soweit von dem verbleibenden Teil der Stromschiene getrennt, dass eine Verbindung des Befestigungsbereichs mit dem verbleibenden Teil der Stromschiene nur über einen Steg erfolgt. Der Querschnitt des Stegs ist dabei ausreichend groß, um den erforderlichen Strom übertragen zu können, ist aber im Vergleich zum angrenzenden Betestigungsbereich und dem angrenzenden verbleibenden teil der Stromschiene kleiner. Der Schlitz weist bevorzugterweise eine Breite senkrecht zur Dicke der Stromschiene von vorzugsweise weniger als 3 mm, am meisten bevorzugt weniger als 1,5 mm, jedoch wenigstens 0,1 mm, am meisten bevorzugt wenigstens 0,2 mm auf. Darüber hinaus ist die Stromschiene, die gelegentlich auch als Stanzgitter bezeichnet wird, da sie aus einem Vollmaterial gestanzt werden kann, aus einem elektrisch leitenden Material mit hoher Stromfähigkeit gebildet. Sie weist durchgängig eine Stärke von wenigstens 0,5 mm und vorzugsweise höchstens 4 mm auf. Vorteilhafterweise besteht sie aus Kupfer oder Kupferlegierungen. Alternativ sind auch Aluminium oder Aluminiumlegierungen denkbar. Durch die Anbindung des

Befestigungsbereichs über den Steg an dem verbleibenden Teil der Stromschiene wird eine gewisse Bewegbarkeit des Befestigungsbereichs zu dem verbleibenden Teil der Stromschiene gewährleistet. Dabei sollte eine Beweglichkeit wenigstens in Erstreckungsrichtung der Sicherung gewährleistet sein. Durch diese Bewegbarkeit können etwaig auftretende Kräfte aufgrund von Temperaturschwankungen und unterschiedlichen Bewegungen von Gehäuse des Stromverteilers und Stromschiene kompensiert werden, so dass die Kräfte nicht auf die befestigende Sicherung übertragen werden, wodurch deren Lebensdauer deutlich erhöht wird.

Vorzugsweise ist es dabei bevorzugt, dass Bewegungen jeweils im Bereich um 90° zu den über die Sicherung eingeleiteten Kräften aufgenommen werden können. Es ist daher von Vorteil, wenn der Steg eine Komponente wenigstens in diesen Richtungen aufweist. Gemäß einer besonders bevorzugten Ausführungsform verläuft die Erstreckung des Stegs von dem Befestigungsbereich zu dem verbleibenden Teil der Stromschiene derart, dass sie die Erstreckungsrichtung der an dem Befestigungsbereich zu befestigende Sicherung schneidet. Insofern dies von der Formgebung der Stromschiene möglich ist, ist es besonders bevorzugt, dass sich die Erstreckung des Stegs von dem Befestigungsbereich zum verbleibenden Teil der Stromschiene und die Erstreckungsrichtung der an dem Befestigungsbereich zu befestigenden Sicherungen im Wesentlichen senkrecht schneiden, um eine optimale Ausrichtung in Bezug auf die einleitenden Kräfte zu erzielen. "Im Wesentlichen" bedeutet dabei eine Abweichung im Sinne von +-20°. Aufgrund dieser Ausgestaltungen ist es bevorzugt, dass die Schlitze eine Komponente sowohl parallel zur Erstreckungsrichtung der an dem Befestigungsbereich zu befestigenden Sicherung als auch quer, insbesondere senkrecht dazu, aufweisen. Dabei können die Schlitze sowohl geradlinig als auch gekrümmt verlaufen. Auch sind kombinierte Verläufe denkbar, bei denen geradlinige Abschnitte über Krümmungen miteinander verbunden sind. Um eine vollständige Trennung der Befestigungsbereiche von dem verbleibenden Teil der Stromschiene mit Ausnahme des Stegs zu erzielen ist der Schlitz oder sind die Schlitze am Rand der Stromschiene offen. D. h. die Schlitze beginnen an einem Umfangsrand (am Umfang) der Stromschiene und laufen von dort aus um den jeweiligen Befestigungsbereich. Das Enden liegt innerhalb des Umfangs der Stromschiene.

Gemäß einer bevorzugten Ausführungsform kann der Befestigungsbereich eine Durchgangsöffnung zum Befestigen der Sicherung aufweisen. Hierbei kann eine Schraubverbindung zur Befestigung der Sicherung mit der Stromschiene eingesetzt werden. Die Durchgangsöffnung weist eine maximale Breite senkrecht zum Verlauf der Durchgangsöffnung durch die Stromschiene bzw. zu ihrer Mittelachse auf. Handelt es sich bei der Durchgangsöffnung um eine kreisrunde Durchgangsöffnung, wird die maximale Breite durch den Durchmesser der Durchgangsöffnung vorgegeben. Bei einer quadratischen oder rechteckigen Durchgangsöffnung wäre die maximale Breite die Diagonale. Bei dieser Ausgestaltung ist es bevorzugt, dass die Breite des Stegs in der Ebene des Befestigungsbereichs und senkrecht zum Verlauf der Durchgrangsöffnung kleiner oder gleich der maximalen Breite ist. Die minimale Größe des Stegs wird durch die notwendige Stromtragfähigkeit vorgegeben. Die Breite des Stegs beträgt gemäß einer bevorzugten Ausführungsform wenigstens 1 mm und höchstens 5 mm. Bei Durchgangsöffnungen zur Befestigung der Sicherungen ergibt sich die Erstreckungsrichtung der Sicherung durch Verbindung der Mittelpunkte der Durchgangsöffnung eines Befestigungsbereichs einerseits und einer Befestigungsöffnung für die Sicherung zur Verbindung mit einem elektrischen Verbraucher andererseits.

Meist wird eine Stromschiene dazu genutzt mehrere Verbraucher bzw. Verbraucherkreise mit einer Stromquelle zu verbinden. Zu diesem Zweck sind vorzugsweise mehrere Befestigungsbereiche vorgesehen. Diese sind vorzugsweise jeweils durch wenigstens einen die Stromschiene durchtrennenden Schlitz soweit von dem verbleibenden Teil der Stromschiene getrennt, dass eine Verbindung des jeweiligen Befestigungsbereichs zu dem verbleibenden Teil der Stromschienen über einen Steg erfolgt, dessen Querschnitt im Vergleich zu dem jeweils angrenzenden Befestigungsbereich und dem jeweils angrenzenden verbleibenden Teil der Stromschiene kleiner ist.

Darüber hinaus umfasst die Stromschiene gemäß der Erfindung wenigstens zwei Fixierbereiche zum Fixieren der Stromschiene an dem Gehäuse des Stromverteilers. Wenigstens ein Befestigungsbereich liegt zwischen zwei Fixierbereichen. Es können aber auch mehrere Befestigungsbereiche zwischen zwei Fixierbereichen liegen.

Erfindungsgemäß ist die Stromschiene über die Fixierbereiche in dem Gehäuse des Stromverteilers befestigt. Das Gehäuse dient als Träger. Das Gehäuse und die Stromschiene weisen Materialien mit unterschiedlichem Wärmeausdehnungskoeffizienten auf. Ferner ist wenigstens eine Sicherung über den Befestigungsbereich einerseits mit der Stromschiene und andererseits mit einem Verbraucher verbunden.

Weitere Merkmale und Vorteile der vorliegenden Erfindung, die alleinstehend oder in Kombination mit einem oder mehreren der obigen Merkmale, insofern sich die Merkmale nicht widersprechen, umgesetzt werden können, sind aus der folgenden Beschreibung bevorzugter Ausführungsformen ersichtlich. Diese erfolgt unter Bezugnahme auf die begleitenden Zeichnungen, in denen:
Figur 1 eine schematische Draufsicht auf eine erfindungsgemäße Stromschiene zeigt, die in einem Stromverteiler montiert ist;
Figur 2 die Stromschiene aus Figur 1 in einer Draufsicht separat darstellt; und
Figur 3a einen Ausschnitt einer Stromschiene ohne die erfindungsgemäßen Schlitze und Figur 3b eine Stromschiene mit den erfindungsgemäßen Schlitzen zeigt.

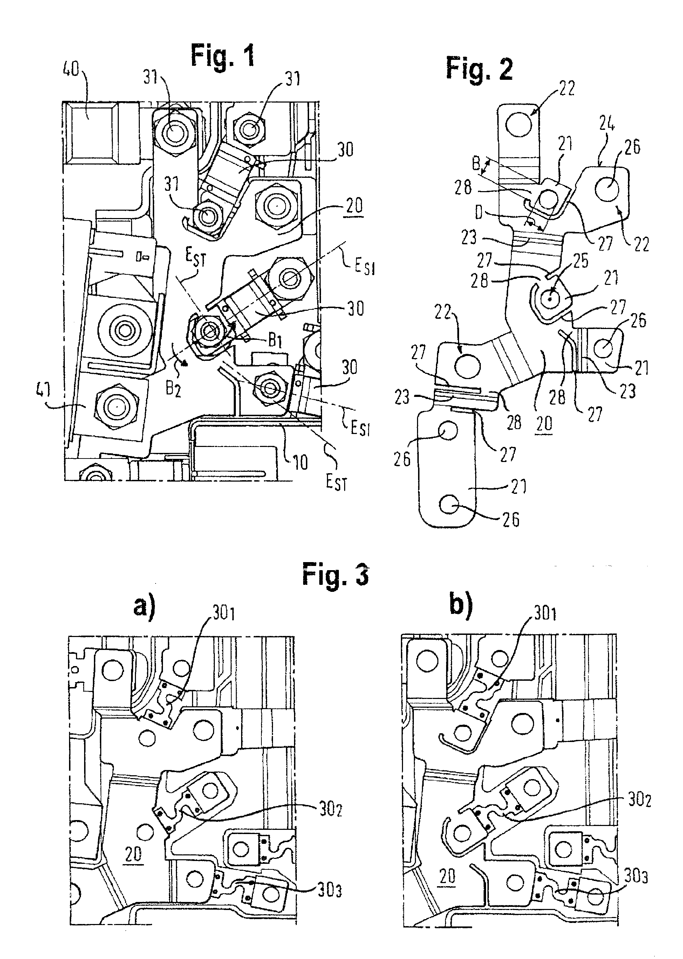

In Figur 1 ist ein Teil eines Gehäuses 10 eines Stromverteilers dargestellt, in dem die Stromschiene 20 der vorliegenden Erfindung zum Einsatz kommt. In dem Gehäuse 10 ist eine Stromschiene 20 fixiert, die eine nicht dargestellte Stromquelle über mehrere Sicherungen 30 mit einem Verbraucher bzw. Verbraucherkreis (nicht dargestellt) verbindet. Darüber hinaus kann die Stromschiene zusätzlich zur Verbindung mit anderen elektrischen oder elektronischen Bauteilen ausgestaltet sein, wie beispielsweise in Figur 1 mit Sicherung 30 oder mit Relais 41.

Die Stromschiene 20, wie sie einzeln in Figur 2 dargestellt ist, besteht vorzugsweise aus einem metallischen Werkstoff, z. B. Kupferlegierung. Alternativ ist jedoch auch eine Aluminiumlegierung, denkbar. Das Gehäuse 10 ist vorzugsweise aus Kunststoff gefertigt und damit aus einem Material mit einem anderen Wärmeausdehnungskoeffizient als die Strom leitende Stromschiene 20.

Die Stromschiene 20 ist aus einem Blech gestanzt und kann gegebenenfalls eine oder mehrere Biegungen 23 um Achsen parallel zur Blechebene aufweisen. Die Haupterstreckungsrichtung ist jedoch im Wesentlichen flächig und parallel zu einer Ebene. D. h. die durch Biegungen 23 verbundenen Teile liegen parallel zueinander. Die Stromschiene 20 weist eine Umfangskante 24 auf, die den Umriss der Stromschiene 20 vorgibt. Darüber hinaus sind mehrere Fixierbereiche 22 vorgesehen, über die die Stromschiene 20 an dem Gehäuse 10 (Träger) des Stromverteilers fixiert, d. h. festgelegt wird.

Neben den Fixierbereichen 22, die primär zur Fixierung der Stromschiene in dem Gehäuse 10 dienen, sind mehrere Befestigungsbereiche 21 vorgesehen, die zur Befestigung einer Sicherung 30 mit der Stromschiene 20 ausgestaltet sind. Dabei kann auch in diesem Bereich eine Fixierung der jeweiligen Befestigungsbereiche 21 relativ zum Gehäuse 10 erfolgen. Da die Befestigungsbereiche jedoch nur eine sehr limitierte Fläche einnehmen, können Temperaturwechsel innerhalb der Befestigungsbereiche 21 nicht zu den eingangs beschriebenen Nachteilen führen. Somit ist eine gewisse Fixierung hier unproblematisch, ohne die Beweglichkeit der Befestigungsbereiche, wie sie später beschrieben wird, negativ zu beeinflussen. Insbesondere muss die Beweglichkeit lediglich zwischen den Befestigungsbereichen und der im Vergleich größer flächigen starren Stromschiene 20 bzw. dem verbleibenden Teil davon gewährleistet sein.

Bei der dargestellten Ausführungsform sind sowohl die Fixierbereiche 22 als auch die Befestigungsbereiche 21 mit kreisrunden Durchgangsöffnungen versehen, die die Stromschiene 20 jeweils vollständig durchdringen. Mit anderen Worten wird sowohl für die Fixierung der Stromschiene 20 im Gehäuse 10 als auch die Befestigung der Sicherungen 30 im Befestigungsbereich 21 Schraubenbolzenkombinationen 31 gewählt, wie dies insbesondere aus Figur 1 ersichtlich ist. Wie es in Figur 2 ebenfalls dargestellt ist, können auch mehrere Durchgangsöffnungen 26 in einem Befestigungsbereich 21 vorgesehen sein. Die Befestigungsbereiche 21 und die Fixierbereiche 22 sowie die verbleibenden Teile der Stromschiene liegen dabei im Wesentlichen mit Ausnahme der Biegungen 23 parallel zueinander.

Gemäß der vorliegenden Erfindung ist wenigstens einer der Befestigungsbereiche 21 (vorzugsweise alle) durch wenigstens einen Schlitz 27 so weit von dem verbleibenden Teil der Stromschiene 20 getrennt, dass eine Verbindung des Befestigungsbereichs 21 nur über einen Steg 28 erfolgt.

Dieser Steg 28 hat einen Querschnitt, der entsprechend groß ist, um den erforderlichen Strom übertragen zu können. Er ist jedoch im Querschnitt deutlich kleiner als der angrenzende Befestigungsbereich sowie der angrenzende verbleibende Teil der Stromschiene. Der Steg 28 entspricht in seiner Stärke senkrecht zur (Blech-)Fläche der Stärke der Stromschiene in dieser Richtung (senkrecht zur Blattebene in Figur 2).

Darüber hinaus werden die Stege, wenn möglich, vorteilhafterweise so ausgerichtet, dass ihre Erstreckung zwischen dem Befestigungsbereich 21 und dem verbleibenden Teil der Stromschiene 21 im Wesentlichen senkrecht zur Erstreckungsrichtung der jeweiligen Sicherung 30 verläuft. Dies ist rein beispielhaft in Figur 1 dargestellt, wobei die Erstreckungsrichtung E_{SI} der jeweiligen Sicherung 30 senkrecht zur Erstreckungsrichtung E_{ST} verläuft. Dadurch ist eine Beweglichkeit B₁, d. h. um eine Achse senkrecht zum Schnittpunkt der Erstreckungen E_{SI} und E_{ST} möglich. Darüber hinaus ergibt sich auch eine Beweglichkeit B₂ um die Achse E_{SI}.

Die Schlitze 27 verlaufen jeweils vom Rand 24 der Stromschiene 20 ausgehend und sind an diesem Rand einseitig offen. Um die erwähnte Erstreckungsrichtung der Stege zu erzielen, ist es bevorzugt, dass die Schlitze 27 wenigstens eine Komponente parallel zur Erstreckungsrichtung E_{SI} der Sicherung und eine Komponente quer dazu aufweisen. Ist es aus Bauraum bedingten Gründen nicht möglich, dass ein senkrechter Schnitt der Erstreckungsrichtungen E_{SI} und E_{ST} erreicht werden kann, so ist es zumindest bevorzugt, dass sich diese Richtungen schneiden, wie es in Figur 1 rechter Hand unten dargestellt ist.

Die Schlitze 27 können geradlinig und/oder gekrümmt verlaufen. Gegebenenfalls können geradlinige Verläufe über eine Krümmung verbunden sein. Gegebenenfalls kann der Steg 28, wie es in Figur 2 unten ersichtlich ist auch durch zwei Schlitze 27 gebildet sein.

Bei den Sicherungen 30 (Fig. 1) handelt es sich vorzugsweise um asymmetrische Sicherungen mit einem S- oder Z-förmigen Verlauf (hier können beispielsweise Sicherungen vom MIDI-oder MEGA-Typ oder andere elektrische Bauteile eingesetzt werden). Der S-förmige Verlauf ist dabei z. B. aus Figur 3 ersichtlich.

Im Rahmen einer FEM (Finite-Elemente-Methode) wurden an den Sicherungen bei Temperaturwechselbelastungen auftretenden Kräfte berechnet. Dabei wurde einerseits eine Stromschiene 20 mit entsprechend vorgesehenen Sicherungen 30₁, 30₂, 30₃ ohne die erfindungsgemäßen Schlitze berechnet (Fig. 3a) und wie in Figur 3b die gleiche Stromschiene mit Schlitzen berechnet.

Dabei wurden die in der folgenden Tabelle ermittelten an den Sicherungen auftretenden Spannungen ermittelt.

**Tabelle 1**

| **Sicherung** | **Figur 3a** | **Figur 3b** |
|---|---|---|
| 30₁ | 208 N/mm² | 162 N/mm² |
| 30₂ | 180 N/mm² | 158 N/mm² |
| 30₃ | 211 N/mm² | 204 N/mm² |

Aus der Tabelle 1 oben ist ersichtlich, dass das Einbringen der Schlitze 27 in die Stromschiene und das damit verbundene Freischneiden der Befestigungsbereiche 21 zu einer deutlichen Reduzierung der auf die Sicherungen aufgebrachten Spannungen führt. Damit verbunden ist ferner auch eine Erhöhung der Lebensdauer der jeweiligen Sicherungen. Darüber hinaus können die Schlitze 27 auf einfachste Art und Weise gleichzeitig mit dem Austanzen der Stromschiene 20 eingebracht werden. D. h. um die vorliegende Erfindung umzusetzen, kann das gleiche Verfahren ohne zusätzliche Nachbearbeitungsschritte eingesetzt werden. Dadurch ist die erfindungsgemäße Stromschiene einfach und kostengünstig herstellbar. Darüber hinaus ergeben sich keine zusätzlich erforderlichen Bauräume, so dass die vorliegende Erfindung sehr flexibel und unabhängig vom vorhandenen Bauraum umgesetzt werden kann. Auch ist es denkbar die vorliegende Erfindung in bestehenden Systemen einzusetzen ohne, dass Umkonstruktionen der die Stromschiene umgebenden Peripherie, z.B. des Stromverteilergehäuses notwendig sind.

Es versteht sich, dass die Beschreibung der obigen Ausführungsform rein beispielhaft erfolgt ist und dass mehr oder weniger Fixierbereiche 22 oder Befestigungsbereiche 21 vorgesehen sein können. Auch ist es denkbar, dass nicht alle Befestigungsbereiche 21 durch Schlitze 27 so weit von dem verbleibenden Teil der Stromschiene 20 getrennt sind, dass die Stege 28 gebildet werden.

## Patentansprüche

1. Stromverteiler für Fahrzeuge, umfassend eine Stromschiene (20) mit wenigstens einem Befestigungsbereich (21) und wenigstens zwei Fixierbereichen (22),
ein Gehäuse (10), an dem die Stromschiene (20) über die Fixierbereiche (22) befestigt ist, wobei das Gehäuse und die Stromschiene aus Materialien mit unterschiedlichem Wärmeausdehnungskoeffizienten gebildet sind; **gekennzeichnet durch**
wenigstens eine Sicherung (30), die einerseits über den Befestigungsbereich (21) an der Stromschiene (20) befestigt ist und andererseits mit einem Verbraucher verbindbar ist, wobei der Befestigungsbereich **durch** wenigstens einen die Stromschiene durchtrennenden Schlitz (27) soweit von dem verbleibenden Teil der Stromschiene getrennt ist, dass eine Verbindung des Befestigungsbereichs zu dem verbleibenden Teil der Stromschiene nur über einen Steg (28) erfolgt, dessen Querschnitt im Vergleich zu dem angrenzenden Befestigungsbereich und dem angrenzenden - verbleibenden Teil der Stromschiene kleiner ist, aberausreichend groß um den erforderlichen Strom übertragen zu können, wobei der Steg (28) des Befestigungsbereichs (21) zwischen den zwei Fixierbereichen liegt und eine Beweglichkeit des Befestigungsbereichs (21) zu dem verbleibenden Teil der Stromschiene **durch** die Anbindung des Befestigungsbereichs (21) an dem verbleibenden Teil der Stromschiene über den Steg (28) gewährleistet ist.

2. Stromverteiler nach Anspruch 1, bei der die Erstreckung (EST) des Stegs (28) von dem Befestigungsbereich zu dem verbleibenden Teil der Stromschiene die Erstreckungsrichtung (ESI) der an dem Befestigungsbereich (21) zu befestigenden Sicherung (30) schneidet.

3. Stromverteiler nach Anspruch 2, bei der die Erstreckung (EST) des Stegs (28) von dem Befestigungsbereich zu dem verbleibenden Teil der Stromschiene die Erstreckungsrichtung (ESI) der an dem Befestigungsbereich (21) zu befestigenden Sicherung (30) im Wesentlichen senkrecht schneidet.

4. Stromverteiler nach einem der vorstehenden Ansprüche, bei der ein Ende des Schlitzes (27) am Rand (24) der Stromschiene (20) offen ist.

5. Stromverteiler nach einem der vorstehenden Ansprüche, bei der wobei der Befestigungsbereich (21) eine Durchgangsöffnung (26) zum Befestigen der Sicherung (30) mit einer maximalen Breite (D) senkrecht zum Verlauf der Durchgangsöffnung aufweist und die Breite (B) des Stegs (28) in der Ebene des Befestigungsbereichs (21) und senkrecht zum Verlauf der Durchgangsöffnung (26) kleiner oder gleich der maximalen Breite der Befestigungsöffnung ist.

6. Stromverteiler nach einem der vorstehenden Ansprüche, bei der mehrere der Befestigungsbereiche (21) vorgesehen sind.

## Claims

1. Power distributor for vehicles, comprising a bus bar (20) having at least one fastening region (21) and at least two fixing regions (22),
a housing (10) to which the bus bar (20) is fastened via the fixing regions (22), wherein the housing and the bus bar are made of materials having different thermal expansion coefficients; **characterised by**
at least one fuse (30) which on the one hand is fastened via the fastening region (21) to the bus bar (20) and on the other hand can be connected to a load, wherein the fastening region is separated by at least one slot (27), which divides the bus bar, from the remaining portion of the bus bar to such an extent that connection of the fastening region to the remaining portion of the bus bar is only via a web (28) of which the cross-section is smaller than the adjoining fastening region and the adjoining remaining portion of the bus bar, but large enough to be able to transmit the necessary current, wherein the web (28) of the fastening region (21) is located between the two fixing regions, and mobility of the fastening region (21) relative to the remaining portion of the bus bar is guaranteed by linking the fastening region (21) to the remaining portion of the bus bar via the web (28).

2. Power distributor according to claim 1, in which the extent (EST) of the web (28) from the fastening region to the remaining portion of the bus bar intersects the direction (ESI) of the fuse (30) to be fastened to the fastening region (21).

3. Power distributor according to claim 2, in which the extent (EST) of the web (28) from the fastening region to the remaining portion of the bus bar substantially perpendicularly intersects the direction (ESI) of the fuse (30) to be fastened to the fastening region (21).

4. Power distributor according to any of the preceding claims, in which one end of the slot (27) at the edge (24) of the bus bar (20) is open.

5. Power distributor according to any of the preceding claims, in which the fastening region (21) has a through-opening (26) for fastening the fuse (30) with a maximum width (D) perpendicularly to the path of the through-opening, and the width (B) of the web (28) in the plane of the fastening region (21) and perpendicularly to the path of the through-opening (26) is smaller than or equal to the maximum width of the fastening opening.

6. Power distributor according to any of the preceding claims, in which several of the fastening regions (21) are provided.

## Revendications

1. Distributeur électrique pour véhicules, comprenant une barre conductrice (20) avec au moins un appendice de fixation (21) et au moins deux zones de fixation (22),
un boîtier (10), contre lequel est fixée la barre conductrice (20) au moyen des zones de fixation (22), le boîtier et la barre conductrice étant réalisés en matériaux présentant des coefficients de dilatation thermique différents ; **caractérisé par**
au moins un fusible (30), fixé d'un côté à la barre conductrice (20) au moyen de l'appendice de fixation (21) et reliable à un récepteur de l'autre côté, l'appendice de fixation étant séparé par au moins une fente (27) traversant la barre conductrice de la partie restante de la barre conductrice, de telle manière qu'une connexion de l'appendice de fixation à la partie restante de la barre conductrice n'est obtenue qu'au moyen d'une traverse (28) dont la section transversale est inférieure à l'appendice de fixation adjacent et à la partie restante adjacente de la barre conductrice, mais est de grandeur suffisante pour permettre la transmission de courant exigée, la traverse (28) de l'appendice de fixation (21) étant présentée entre les deux zones de fixation, et une mobilité de l'appendice de fixation (21) par rapport à la partie restante de la barre conductrice étant obtenue par la connexion par la traverse (28) de l'appendice de fixation (21) à la partie restante de la barre conductrice.

2. Distributeur électrique selon la revendication 1, où l'extension (EST) de la traverse (28) de l'appendice de fixation à la partie restante de la barre conductrice croise la direction d'extension (ESI) du fusible (30) à fixer contre l'appendice de fixation (21).

3. Distributeur électrique selon la revendication 2, où l'extension (EST) de la traverse (28) de l'appendice de fixation à la partie restante de la barre conductrice croise sensiblement perpendiculairement la direction d'extension (ESI) du fusible (30) à fixer contre l'appendice de fixation (21).

4. Distributeur électrique selon l'une des revendications précédentes, où une extrémité de la fente (27) est ouverte sur le bord (24) de la barre conductrice (20).

5. Distributeur électrique selon l'une des revendications précédentes, où l'appendice de fixation (21) présente une ouverture de passage (26) pour la fixation du fusible (30) avec une largeur (D) maximale perpendiculairement au tracé de l'ouverture de passage, et où la largeur (B) de la traverse (28) sur le plan de l'appendice de fixation (21) et perpendiculairement au tracé de l'ouverture de passage (26) est inférieure ou égale à la largeur maximale de l'ouverture de fixation.

6. Distributeur électrique selon l'une des revendications précédentes, où plusieurs appendices de fixation (21) sont prévus.
